**Europäisches Patentamt**

**European Patent Office**

**Office européen des brevets**

(19)

(11) Veröffentlichungsnummer : **0 095 479**
**B1**

(12) **EUROPÄISCHE PATENTSCHRIFT**

(45) Veröffentlichungstag der Patentschrift :
05.06.85

(21) Anmeldenummer : 83900014.8

(22) Anmeldetag : 26.11.82

(86) Internationale Anmeldenummer :
PCT/DE 82/00223

(87) Internationale Veröffentlichungsnummer :
WO/8301993 (09.06.83 Gazette 83/14)

(51) Int. Cl.⁴ : **F 24 H   9/20, G 05 D  23/24**

(54) **ELEKTRISCH BEHEIZTER HEISSWASSERBEREITER.**

(30) Priorität : 03.12.81 DE 8135547 U

(43) Veröffentlichungstag der Anmeldung :
07.12.83 Patentblatt 83/49

(45) Bekanntmachung des Hinweises auf die Patenterteilung : 05.06.85 Patentblatt 85/23

(84) Benannte Vertragsstaaten :
AT BE CH DE FR GB LI LU NL SE

(56) Entgegenhaltungen :
DE-A- 2 325 526
DE-A- 2 400 478
DE-B- 1 020 743

(73) Patentinhaber : Joh. Vaillant GmbH u. Co
Berghauser Strasse 40 Postfach 10 10 20
D-5630 Remscheid 1 (DE)
DE LU SE
COFRABEL N.V.
Goldenhopestraat 15
B-1620 Drogenbos (BE)
BE
VAILLANT S.A.R.L
4, Rue des Oliviers Orly-Sénia 326
F-94537 Rungis Cedex (FR)
FR
VAILLANT Ges.m.b.H
Forchheimergasse 7 Postfach 56
A-1233 Wien (AT)
AT
Vaillant Ltd.
Vaillant Building, Aerodrome Way Heston Industrial
Estate
GB-Hounslow, Middx. TW5 9QB (GB)
GB
SCHONEWELLE B.V.
Ellermanstraat 17
NL-1099 BX Amsterdam (NL)
NL
Vaillant GmbH
Riedstrasse 8
CH-8953 Dietikon 1 (CH)
CH LI

(72) Erfinder : **ORTLINGHAUS Ulrich,**
**Sternstrasse 22**
**D-5630 Remscheid (DE)**


(74) Vertreter : **Heim, Johann-Ludwig**
**c/o Joh. Vaillant GmbH u. Co Postfach 10 10 20**
**Berghauser Strasse 40**
**D-5630 Remscheid 1 (DE)**

**Beschreibung**

Die vorliegende Erfindung bezieht sich auf einen elektrisch beheizten Heißwasserbereiter gemäß dem Oberbegriff des Hauptanspruchs.

Ein solcher Heißwasserbereiter ist beispielsweise aus der DE-AS 1 020 743 bekanntgeworden, in einem einzigen Gehäuse ist der Speicher mit einem Durchlauferhitzer baulich vereinigt worden. Es ist ein Temperaturregler vorhanden, der eine Grundheizung beherrscht, und es ist ein Wasserdruckschalter für eine Zusatzheizung vorgesehen, der über dem Zapfen größerer Durchsätze in Tätigkeit geht.

Es sind weiterhin reine Durchlauferhitzer mit elektronischen Temperaturreglern bekanntgeworden, die mit Phasenanschnittsteuerungen oder Nullspannungsschaltern arbeiten. Hierbei wird an den oder die Heizwiderstände des Durchlauferhitzers nur soviel elektrische Leistung angeschaltet, wie zum Erreichen des vorgegebenen Temperatursollwertes notwendig ist. Der Nachteil dieser Durchlauferhitzer besteht darin, daß im speisenden Netz durch das Takten der Wechselbeziehungsweise Drehspannung niederfrequente Störimpulse entstehen, die sich auf eine Vielzahl angeschlossener Geräte nachteilig auswirken. Dieser Grund hat dazu geführt, daß Durchlauferhitzer mit elektronischen Temperaturreglern bislang keine weitere Verbreitung fanden.

Der vorliegenden Erfindung liegt die Aufgabe zugrunde, einen elektrisch beheizten Heißwasserbereiter zu schaffen, der mit einem elektronischen Temperaturregler zum exakten Verstellen der jeweils benötigten Leistung im Durchlauferhitzer ausgestattet werden kann, bei dem aber trotzdem im speisenden Netz keine Taktstörungen auftreten.

Die Lösung dieser Aufgabe liegt in den kennzeichnenden Merkmalen des Hauptanspruchs.

Der technische Fortschritt ist darin zu sehen, daß innerhalb des Durchlauferhitzers beziehungsweise des Speichers eine Aufteilung der zur Verfügung stehenden Gesamtenergie stattfindet, was aber für das speisende Netz keine Rückwirkungen hat. Im Durchlauferhitzer selbst kann jede Teilleistung eingespeist werden, womit eine exakte Temperaturregelung oder -steuerung möglich ist. Die im Anspruch eins geschützte Ausführung hat zudem den Vorteil, sowohl für eine Phasenwechselspannung als für Mehrphasenspannungen anwendbar zu sein.

Weitere Ausgestaltungen und besonders vorteilhafte Weiterbildungen der Erfindung sind Gegenstand der Unteransprüche und gehen aus der nachfolgenden Beschreibung hervor, die ein Ausführungsbeispiel der Erfindung anhand der Figuren eins bis neun näher erläutert.

Es zeigen

Figur eins eine schematische Darstellung der Kombination eines Durchlauferhitzers mit einem Speicher,

Figur zwei die bauliche Ausgestaltung der Kombination Speicher — Durchlauferhitzer im Querschnitt,

Figur drei die Prinzipdarstellung des elektronischen Reglers für die Ansteuerung der Heizwiderstände des Speichers und des Durchlauferhitzers und

die Figuren vier bis neun elektrische Spannungsdiagramme.

In allen neun Figuren bedeuten gleiche Bezugszeichen jeweils die gleichen Einzelheiten.

Im Zuge einer Brauchwasserzapfleitung 1, die an ein Frischwassernetz angeschlossen ist, liegt ein mit einer thermischen Isolationsschicht 2 versehener Speicher 3, der über eine Wasserverbindungsleitung 4 mit einem Durchlauferhitzer 5 verbunden ist, in dessen Auslaßleitung 6 zunächst ein Temperaturfühler 7 und ein Zapfventil 8 vorgesehen sind, die zu einem Warmwasserauslaß 9 führen.

Sowohl der Speicher 3 als auch der Durchlauferhitzer 5 sind über elektrische Widerstände beheizt, die Widerstände sind so bemessen, daß bei gleicher elektrischer Beaufschlagung gleiche Heizleistungen im Durchlauferhitzer und Speicher erzielt werden.

Im Ausführungsbeispiel gemäß Figur eins ist ein Anschluß dieser Heizwiderstände an ein elektrisches 3-Phasen-Netz RST gewählt worden, die zusammen mit dem Temperaturfühler 7 über eine Leitung 10 mit einem Temperaturregler 11 verbunden sind. Im Durchlauferhitzer sind drei Heizwiderstände 12, 13 und 14 angeordnet, die über Leitungen 15, 16 und 17 mit dem Regler verbunden sind, während Leitungen 18, 19 und 20 mit drei Heizwiderständen 21, 22 und 23 im Inneren des Speichers verbunden sind. Die Heizwiderstände 12, 13, 14, 21, 22, 23 liefern jeweils die gleiche Wärmeleistung bei Beaufschlagung mit der gleichen elektrischen Spannung.

Das Ausführungsbeispiel nach Figur zwei unterscheidet sich von dem nach Figur eins dadurch, daß nur eine 1-Phasen-Wechselspannungsquelle zur Speisung der Heizwiderstände vorgesehen ist. Demgemäß ist im Speicher 3 nur ein einziger Widerstand genauso wie im Durchlauferhitzer 5 vorgesehen. Beide Widerstände hängen an der Speisespannungsquelle R.

Im einzelnen ist der Speicher 3 als zylindrisches oder prismatisches Gehäuse 24 ausgestaltet, das an seiner Unterseite den Einlaß 1 aufweist. In der Nähe des Bodens 25 des Speichers 3 ist der Heizwiderstand 21 angeordnet. Das Oberteil 26 des Speichers 3 stellt den Durchlauferhitzer 5 dar, in dem das Oberteil durch eine waagerechte Wandung 27, die mit einer Isolierschicht 28 versehen ist, vom Speicher 3 abgetrennt ist. Durch eine freibleibende Einlaßstelle 29 ist der Innenraum 30 des Speichers mit dem Innenraum 31 des Durchlauferhitzers verbunden, der drei Kanäle 32 aufweist, die alle miteinander verbunden sind. Durch sämtliche Kanäle 32 zieht sich der elektrische Heizwiderstand 12, der mit seinen Zuleitungen 15 und 16 auch mit der Speisespannungsquelle R unter Zwischenschaltung des Reglers 11 verbunden ist. Der Heizwiderstand 12 entspricht in seinem Wärmeerzeugungswert dem Heizwiderstand 21.

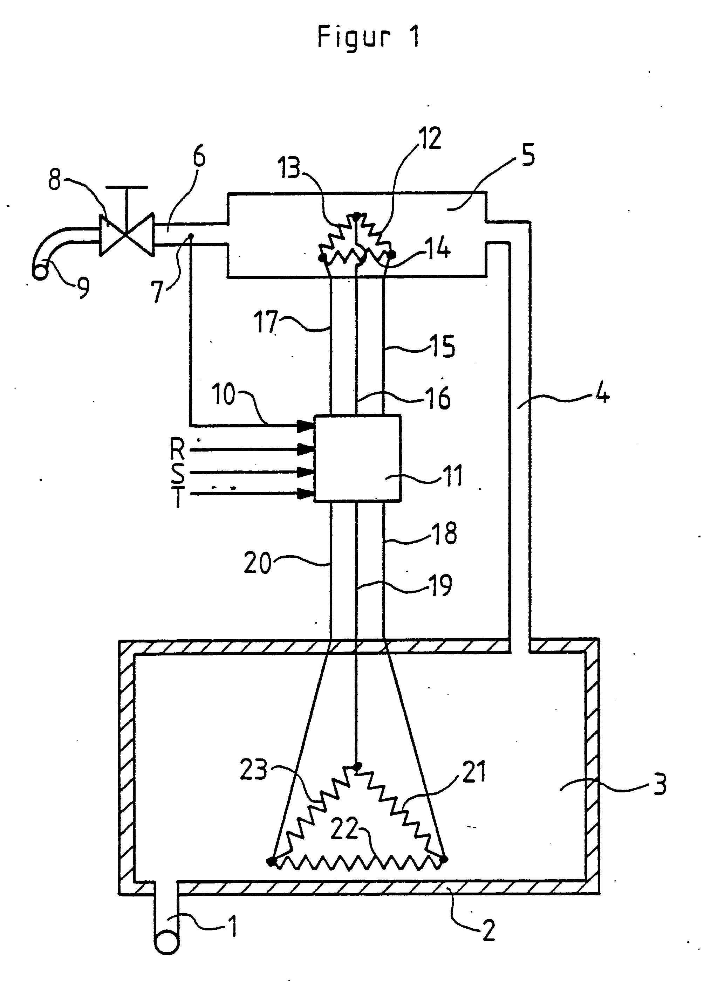

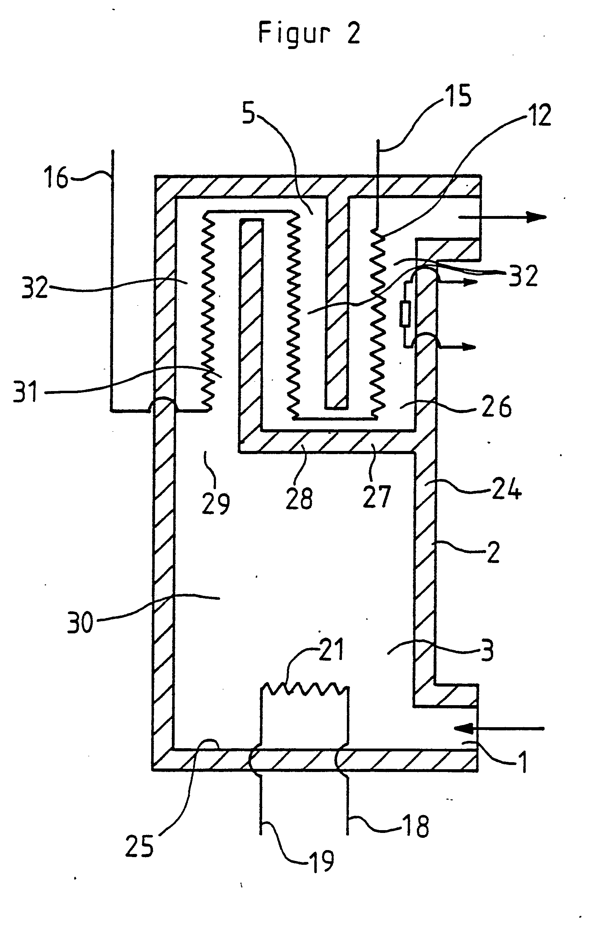

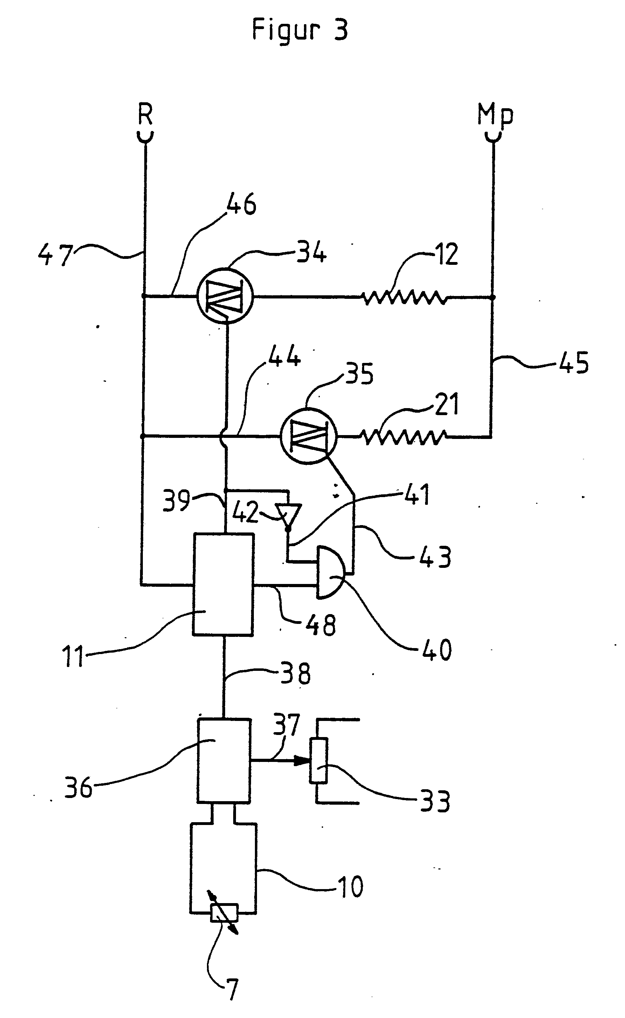

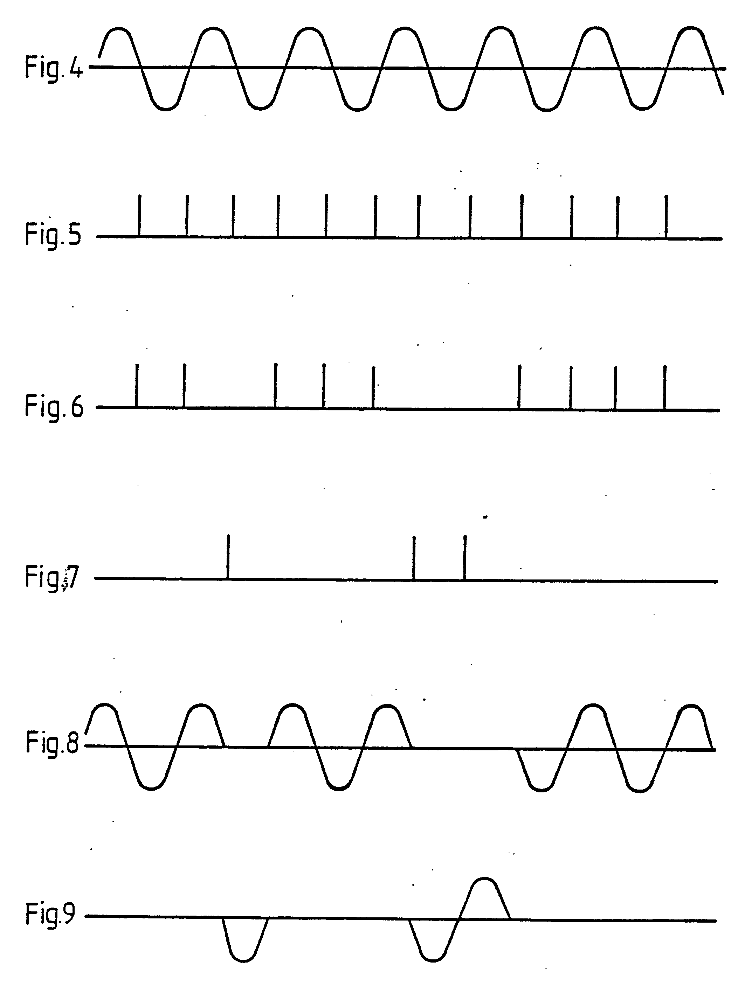

Das wesentliche des elektronischen Temperaturreglers geht aus der Figur drei hervor : Der Regler umfaßt den als NTC-Widerstand ausgeführten Temperaturfühler 7, einen elektrischen Sollwertgeber-Widerstand 33, den eigentlichen Temperaturregler 11 sowie dessen Stellglieder 34 und 35, die im Zuge der Heizwiderstände 12 und 21 liegen. Das Ausführungsbeispiel gemäß Figur drei ist auf 1 phasige Speisung abgestellt, bei Mehrphasenspeisung wäre die Anzahl der Stellglieder und deren Ansteuerung entsprechend zu erhöhen.

Der NTC-Widerstand 7 ist über seine Leitung (en) 10 mit einem Komparator 36 verbunden, auf den auch der Sollwertgeber-Widerstand 33 über eine Leitung 37 angeschlossen ist. Im Komparator 36 wird die Regelabweichung gebildet. Der Ausgang des Komparators 38 ist auf den Regler 11 gegeben, der als P-Regler ausgebildet ist. Über eine Leitung 47 ist er mit der Netzspannungsquelle R verbunden. Der Regler 11 weist zwei Ausgänge 48 und 39 auf, wobei der Ausgang 48 gleichzeitig den Eingang eines Und-Gliedes 40 bildet, dessen anderer Eingang 41 unter Zwischenschaltung eines Negationsgliedes 42 mit dem Ausgang 39 verbunden ist. Der Ausgang 43 des Und-Gliedes ist mit einer Steuerelektrode des als Triac ausgebildeten Stellgliedes 35 verbunden. Die Leistungsanschlüsse des Triacs 35 sind einmal über eine Leitung 44 mit der Leitung 47 und über den mit ihm in Serie liegenden Widerstand 21 des Speichers mit einer Leitung 45 verbunden, die ihrerseits an den MP-Anschluß der speisenden Netzspannungsquelle angeschlossen ist.

Auch das zweite Stellglied 34 ist als Triac ausgebildet, es ist über eine Leitung 46 gleichermaßen mit der Leitung 47 sowie über den mit ihm in Serie liegenden Widerstand 12 des Durchlauferhitzers mit der Leitung 45 verbunden.

Anhand der Diagramme der Figuren vier bis neun wird nunmehr die Funktion des elektrischen Heißwasserbereiters erläutert.

Die Kurve gemäß Figur vier stellt den Spannungsverlauf zwischen R und MP dar, wie er also an den Leitungen 38 and 45 anliegt. Es zeigt sich, daß es sich hier um eine normale Netzwechselspannung von 50 Hz handelt. Wird nun der elektrische Heißwasserbereiter durch Öffnen des Zapfventils 8 in Tätigkeit gesetzt und wird davon ausgegangen, daß das im Innenraum 30 des Speichers 3 befindliche Wasser teilweise erwärmt ist, so geschieht folgendes : Sowie zwischen der Temperatur des auslaufenden Wassers, geführt durch den Meßwiderstand 7 und den am Sollwertgeber 33 eingestellten Sollwert, eine Regelabweichung auftritt, wird diese auf den Temperaturregler 11 geschaltet. Da von im Speicher 3 vorgewärmtem Wasser ausgegangen wird, ist nicht die volle Heizleistung des Durchlauferhitzers notwendig, um die Regelabweichung zu beseitigen. Somit wird der Durchlauferhitzer nur eine Teilleistung benötigen, also aus der Vielzahl der in Figur vier dargestellten Netzwechsel-Spannungsimpulse in positiver und negativer Richtung nur wenige benötigen, um die Regelabweichung auf Null zurückzuführen. Die hierzu benötigte Impulszahl sei in Figur acht dargestellt, so daß zur Ergänzung zu den von der Netzwechselspannung regelmäßig vorgegebenen Impulse die in Figur neun dargestellten Impulse übrigbleiben.

Der Regler 11 erzeugt demgemäß auf seiner Ausgangsleitung 39, die die Beheizung des Durchlauferhitzers beherrscht, eine Steuerspannung, die dem Verlauf der Figur sechs entspricht. Somit wird der Triac 34 entsprechend beaufschlagt, das heißt, am Ausgang des Triacs 34 erscheinen Leistungsimpulse, die dem Impulsbild der Figur acht entsprechen. Da der Ausgang 39 über das Negationsglied auf den Eingang 41 des Und-Gliedes 40 geschaltet ist, auf der Leitung 48 aber eine Impulsfolge entsprechend der in Figur fünf dargestellten Spannung ansteht, wird das Und-Glied gesperrt, wenn das Stellglied 34 mit einem Steuerimpuls beaufschlagt wird. Das bedeutet, daß das Und-Glied über die Leitung 43 das andere Stellglied 35, das den Speicher beherrscht, nur dann freigibt, wenn der Durchlauferhitzerwiderstand 12 gerade keinen Spannungsimpuls bekommen hat. Somit resultiert auf den Ausgang des Triacs 35 eine Impulsspannung entsprechend Figur neun.

Die Figur fünf zeigt eine Triggerspannungsimpulsreihe, die durch Aufbereiten der Spannung nach Figur vier entsteht, wobei jedem Nulldurchgang der Spannung gemäß Figur vier ein Impuls zugeordnet wird. Diese Triggerspannungsimpulse stehen beispielsweise auf der Leitung 48 an. Die Triggerspannungsimpulse nach Figur sechs werden vom Regler 11 auf der Leitung 39 erzeugt. Die Triggerspannungsimpulse nach Figur sieben entstehen auf der Leitung 43.

Im Bereich der Leitungen 47 und 45 entsteht wiederum die Addition der Spannungszüge aus den Figuren acht und neun, das heißt die normale Netzwechselspannung gemäß Figur vier. Obwohl der Durchlauferhitzer mit seinem Heizwiderstand (beziehungsweise seinen Heizwiderständen) nur eine getaktete Leistung erhält, um die Regelabweichung zu Null zu bringen, hat dies für das speisende Netz keine Rückwirkungen, da dem speisenden Netz immer die volle Netzwechselspannung entnommen wird.

Die im Durchlauferhitzer nicht benötigten Spannungsimpulse gemäß Figur neun werden auf den Speicherwiderstand 21 gegeben und heizen das durch den Einlauf 1 einlaufende kalte Wasser vor. Durch die thermische Isolation 2 ist ein guter Speicherwirkungsgrad gesichert.

Je wärmer das Wasser ist, das im Innenraum 30 des Speichers 3 gespeichert ist, um so weniger braucht bei gleicher Sollwertvorgabe der Durchlauferhitzer mit Spannungsimpulsen beaufschlagt zu werden.

Tritt nun der Fall ein, daß das im Innenraum 30 gespeicherte Wasser so warm ist, daß keine Regelabweichung auftritt, so würde der Speicher mit der vollen Netzwechselspannung gemäß Figur vier beaufschlagt werden. Für diesen Fall ist im Innenraum des Speichers ein nicht gezeichneter Temperaturfühler vorgesehen, der ein Abschalten des speisenden Netzes bewirkt. Der Regler 11 kann auch so ausgestaltet sein, daß er bei einem völligen Abschalten des Stellgliedes 34 auch das Stellglied 35 nicht mehr mit Impulsen beaufschlagt. Der Regler 11 würde erst dann wieder in Funktion gehen, wenn der Speicher entladen ist oder wenn kurz vor dem Entladen eine Regelabweichung in Komparator 36 angezeigt wird.

Es soll auch noch der Fall betrachtet werden, daß der Speicher voll entladen ist und das Zapfventil 8 geöffnet wird. In diesem Fall ist eine maximale Regelabweichung vorhanden, die dazu führt, daß die volle zur Verfügung stehende Heizleistung durch völlige Freigabe des Triacs 34 dem Durchlauferhitzerwiderstand aufgeschaltet wird. In diesem Fall ist kein Leistungsüberschuß vorhanden, um ihm den Speicherwiderstand 21 zuzufügen. Der elektrische Heißwasserspeicher arbeitet in diesem Falle als reiner Durchlauferhitzer. Wird die Regelabweichung kleiner, besteht die Möglichkeit, das Stellglied 34 impulsweise zu sperren, so daß der Speicher mit den für den Durchlauferhitzer ausfallenden Netzwechsel-Spannungsimpulsen vorgeheizt ist.

## Patentansprüche

1. Elektrisch beheizter Wasserbereiter mit einem Speicher (3) und einem Durchlauferhitzer (5), die beide von elektrischen Widerständen beheizbar sind, und mit einem Temperaturregler, dadurch gekennzeichnet, daß der Temperaturregler (11) für den Durchlauferhitzer (5) nicht benötigte elektrische Energieanteile auf den Speicher (3) schaltet.

2. Elektrisch beheizter Heißwasserbereiter nach Anspruch eins, dadurch gekennzeichnet, daß die Heizwiderstände (12, 21) für den Durchlauferhitzer beziehungsweise den Speicher so gewählt sind, daß sie die gleiche elektrische Heizleistung abgeben.

3. Elektrisch beheizter Heißwasserbereiter nach Anspruch eins oder zwei, dadurch gekennzeichnet, daß der Durchlauferhitzer im Oberteil (26) des Speichers (3) angeordnet ist.

4. Elektrisch beheizter Heißwasserbereiter nach einem der Ansprüche eins bis drei mit einem elektronischen Temperaturregler sowie als Triacs ausgebildeten Stellgliedern in den Zuleitunen zu den Widerständen des Durchlauferhitzers und des Speichers und Zuleitungen vom Regler zu den Steuerelektroden der Triacs, dadurch gekennzeichnet, daß in einer Zuleitung (43) ein Und-Glied (40) vorgesehen ist, dessen einer Eingang mit einem Reglerausgang (3) unter Zwischenschaltung eines Inverters (42) verbunden ist.

## Claims

1. An electrically heated water heater comprising a reservoir (3) and a flow heater (5), both of which are adapted to be heated by electric resistors, and further comprising a temperature controller, characterized in that the temperature controller (11) for the flow heater (5) directs electrical energy that is not required to the reservoir (3).

2. An electrically heated water heater according to claim 1, characterized in that the heating resistors (12, 21) for the flow heater and for the reservoir, respectively, are selected to produce the same quantity of electrically generated heat.

3. An electrically heated water heater according to claim 1 or 2, characterized in that the flow heater is disposed in the upper portion (26) of the reservoir (3).

4. An electrically heated water heater according to any of claims 1 to 3, comprising an electronic temperature controller, final control elements consisting of triacs in the supply leads connected to the resistors of the flow heater and of the reservoir, and supply leads from the controller to the control electrodes of the triacs, characterized in that one supply lead (43) incorporates an AND gate (40), one input terminal of which is connected through an inverter (42) to an outpout terminal (3) of the controller.

## Revendications

1. Chauffe-eau électrique avec un réservoir (3) et un chauffe-eau instantané (5) chauffés par des résistances électriques, et avec un régulateur de température, caractérisé par le fait que le régulateur de température (11) fait transmettre l'énergie électrique non utilisée par le chauffe-eau instantané (5) au réservoir (3).

2. Chauffe-eau électrique suivant la revendication un, caractérisé par le fait que les résistances chauffantes (12, 21) du chauffe-eau instantané respectivement du réservoir sont conçues de sorte à fournir la même puissance calorifique.

3. Chauffe-eau électrique suivant la revendication un ou deux, caractérisé par le fait que le chauffe-eau instantané est disposé dans la partie supérieure (26) du réservoir (3).

4. Chauffe-eau électrique suivant l'une des revendications un à trois avec un régulateur de température électronique ainsi qu'avec des organes régulateurs conçus comme des triacs et disposés sur les lignes d'alimentation des résistances du chauffe-eau instantané et du réservoir et avec des lignes de connexion entre le régulateur et les électrodes de commande des triacs, caractérisé par le fait qu'une ligne (43) comporte un circuit ET (40) dont une entrée est reliée à une sortie (39) du régulateur, par l'intermédiaire d'un circuit de négation (42).

# Figur 1

## Figur 2

**0 095 479**

Figur 3

3

Fig. 4

Fig. 5

Fig. 6

Fig. 7

Fig. 8

Fig. 9